# EUROPÄISCHE PATENTSCHRIFT

(11) **EP 2 177 403 B1**
(45) Veröffentlichungstag und Bekanntmachung des Hinweises auf die Patenterteilung: **11.07.2012**
(21) Anmeldenummer: 09012843.0
(22) Anmeldetag: 10.10.2009
(51) Int. Cl.: B60R 21/0136

(54) **Verfahren zur Detektion von Verformungen an einem Fahrzeugbauteil und Kraftfahrzeug**
Method for detecting deformations at a vehicle component and motor vehicle
Procédé de détection de déformations sur un composant de véhicule automobile et sur le dit véhicule

(30) Priorität: 17.10.2008 DE 102008051796
(43) Veröffentlichungstag der Anmeldung: 21.04.2010
(73) Patentinhaber: Benteler Automobiltechnik GmbH, 33102 Paderborn (DE)
(72) Erfinder: Andres, Thorsten, 33106 Paderborn (DE); Richter, Björn, 33106 Paderborn (DE)
(74) Vertreter: Griepenstroh, Jörg

(56) Entgegenhaltungen:
- WO-A2-01/36983
- DE-A1- 4 015 668

## Beschreibung

Die Erfindung betrifft ein Kraftfahrzeug sowie ein Verfahren zur Detektion von Verformungen von Fahrzeugbauteilen.

Die Detektion eines Unfalls ist bei Kraftfahrzeugen von elementarer Wichtigkeit hinsichtlich des Insassenschutzes, um relevante Sicherheitsmaßnahmen, wie beispielsweise das Auslösen eines Airbags einzuleiten.

Stand der Technik zur Detektion von Kraftfahrzeugunfällen ist die Verwendung von Beschleunigungssensoren, wie sie beispielsweise in der DE 10 2004 029 816 A1 beschrieben werden. Der Beschleunigungssensor reagiert dabei rein mechanisch auf Verzögerungen eines Fahrzeugs, wodurch beispielsweise eine seismische Masse des Sensors ausgelenkt wird. Dabei entsteht zwischen beweglichen und den starren Stegen des Sensors eine Änderung der elektrischen Eigenschaften, was ein Maßstab für die Größe der Beschleunigung/Verzögerung darstellt.

Der Nachteil bei der Verwendung zentraler Beschleunigungssensoren ist, dass beispielsweise im Falle eines Frontalaufpralls sich die Beschleunigungskraft für eine niedrige Geschwindigkeit und eine hohe Geschwindigkeit beim Unfall in den ersten 20 bis 30 ms nur unwesentlich unterscheiden. Erst für Zeiten größer als 30 ms treten wesentliche Unterschiede auf. Dies liegt daran, dass die Energie des Aufpralls zu Beginn des Unfalls durch die weiche Grundstruktur der Crashbox abgebaut wird. Während dieser Zeit erfährt die restliche Karosserie kaum eine BeschleunigungNerzögerung. Außerdem lässt sich der Ort des Aufpralls nur sehr ungenau bestimmen, ebenso wie die Intensität des Unfalls.

Eine weitere Methode zur Detektion eines Unfalls ist die Auswertung des Körperschalls, wie es in der DE 10 2005 046 928 A1 beschrieben wird. Dieses Verfahren wird auch als Crash Impact Sound Sensing (CISS) bezeichnet. Bei der Verformung von Strukturbauteilen eines Kraftfahrzeugs entstehen auf Grund der auftretenden Spannungen Mikrorisse in den Bauteilen, mit welchen die Emission von Körperschallwellen verknüpft ist. Durch die digitale Auswertung des Körperschallsignals lassen sich dann Verformungen der Fahrzeugkarosserie durch einen Unfall nachweisen. Es ist jedoch schwierig, den Ursprung des Aufpralls bzw. der Verformung zu selektieren, da der Ursprung des Körperschalls ebenfalls unbekannt ist. Zusätzlich muss ein charakteristisches Signal vorhanden sein, um den Unfall bzw. die Verformung der Fahrzeugkarosserie eindeutig von sonstigen Geräuschen zu unterscheiden. Dies erfordert, dass das Signal vom Rauschen getrennt wird, wofür eine entsprechend hohe Rechenleistung sowie eine Rechenzeit von etwa 15 ms benötigt wird.

Darüber hinaus beschreibt die WO 01/36983 ebenfalls ein Verfahren zur Detektion von Verformungen von Fahrzeugbauteilen gemäβ dem Oberbegriff des Anspruchs 1, insbesondere sind hier Algorithmen und Ordnungen zur Detektion von Fahrzeugverformungen im Falle eines Unfalls beschrieben. Darunter auch ein optischer Detektor, welcher gegenüber einem Strichcodefenster angeordnet ist, wobei ein Lichtemitter gegenüber dem optischen Detektor auf der anderen Seite des Strichcodefensters angeordnet ist. Bei einer Verformung einer Säule eines Fahrzeugrahmens werden Detektor und Strichcodefester relativ zueinander verschoben und die Signale detektiert.

Darüber hinaus beschreibt die DE 40 15 668 A1 einen Sensor zur Messung von Geschwindigkeitsänderungen eines Fahrzeuges wobei dieser Sensor auf der Relativbewegung einer trägen Masse zu einem Fahrzeug beim Aufprall des Fahrzeugs nutzt.

Die Aufgabe der vorliegenden Erfindung besteht darin, ein Verfahren aufzuzeigen, mit welchem eindeutige Aussagen bzgl. der Position der Verformung eines Fahrzeugbauteils und des zeitlichen Fortschritts der Verformung gemacht werden können und mit welchem die Schwere des Unfalls besser bestimmt werden kann. Die Auswertung soll ohne größeren Rechenaufwand in einem sehr kurzen Zeitbereich, insbesondere kleiner 10 ms, nach dem Crashbeginn erfolgen.

Des Weiteren soll ein Kraftfahrzeug mit einer Vorrichtung zur Detektion von Verformungen von Fahrzeugbauteilen, insbesondere Karosseriebauteilen aufgezeigt werden.

Das Verfahren mit den Maßnahmen des Patentanspruch 1 löst den verfahrensmäßigen Teil der Aufgabe.

Die Lösung des gegenständlichen Teils der Aufgabe besteht in einem Kraftfahrzeug gemäß den Merkmalen von Patentanspruch 6.

Weitere erfindungsgemäße Maßnahmen des Verfahrens sind Gegenstand der Unteransprüche 2 bis 5.

Weiterbildungen des erfindungsgemäßen Kraftfahrzeugs sind Gegenstand der Unteransprüche 7 bis 16.

Das erfindungsgemäße Verfahren basiert auf dem Zusammenspiel einer Auswerteeinheit mit mindestens einer, vorzugsweise mehrerer, Sensoreinheiten. Die Sensoreinheit umfasst ein an einem Fahrzeugbauteil, beispielsweise der Karosserie, angeordnetes Rasterbauteil mit einem Raster, welches bei einer Verformung der Fahrzeugkarosserie relativ zu einem Lichtemitter eines Emitterbauteils verschoben wird. Durch die Verschiebung des Rasters oder des Lichtemitters wird ein von dem Lichtemitter auf einen Detektor treffender Strahlengang eines Lichtstrahls alternierend unterbrochen. Der Detektor erkennt die einzelnen Lichtimpulse und überträgt auf Basis der Lichtimpulse ein zeitlich moduliertes Signal an die Auswerteeinheit, welche die von einem oder mehreren derartiger Sensoreinheiten empfangenen Signale auswertet. Durch die bekannte Breite der Rasterbereiche, die Frequenz und die Anzahl der Lichtimpulse kann sehr schnell und ohne großen Rechenaufwand die Verformungsgeschwindigkeit und somit die Schwere des Unfalls berechnet werden.

Im Sinne der vorliegenden Erfindung bezeichnet der Strahlengang den Weg, auf dem sich ein vom Lichtemitter ausgesandter Lichtstrahl zu einem Detektor bewegt. Der Lichtemitter kann als Licht emittierende Diode (LED) ausgeführt sein oder er emittiert ein Lichtsignal, welches er über eine Lichtleitfaser von einem entfernteren Licht abgebenden System, beispielsweise der Auswerteeinheit, empfängt.

Der Strahlengang des Lichtstrahls ist im Sinne einer ersten Ausführungsform der Erfindung gerade, wenn der Detektor dem Lichtemitter gegenübersteht und das Raster zwischen Lichtemitter und Detektor angeordnet ist. In diesem Fall besteht das Raster des Rasterbauteils aus Bereichen, welche lichtdurchlässig sind sowie aus Bereichen, welche den Strahlengang unterbrechen, also lichtundurchlässig sind. Die lichtdurchlässigen Bereiche können in Form von durchgängigen Öffnungen, beispielsweise kreis- oder rechteckförmig, ausgestaltet sein. Ebenso ist es möglich die lichtdurchlässigen Bereiche aus transparentem Material, beispielsweise Glas oder Kunststoff, herzustellen, während alle anderen Bereiche aus lichtundurchlässigem Material bestehen. Es ist auch denkbar das komplette Raster aus einem lichtdurchlässigen Material herzustellen, wobei diejenigen Bereiche, welche den Strahlengang unterbrechen sollen, beispielsweise durch eine Beschichtung oder Abdeckung lichtundurchlässig gemacht werden.

Wenn der Lichtemitter und der Detektor gemäß einer zweiten Ausführungsform der Erfindung als eine Einheit ausgeführt sind, verläuft der Strahlengang nicht mehr gerade, sondern er wird umgelenkt. Hierfür weist das Raster nicht zwangsläufig Öffnungen auf, sondern Bereiche, die den auftreffenden Lichtstrahl in Richtung des Detektors reflektieren und Bereiche, welche den Lichtstrahl nicht reflektieren. Das Nichtreflektieren kann beispielsweise durch Streuung, Absorption oder Transmission erfolgen. Die den Strahlengang unterbrechenden Bereiche sind entweder mit einer rauhen Oberfläche versehen, welche den auftreffenden Lichtstrahl streut, oder weisen eine Oberfläche auf, die den Lichtstrahl absorbiert oder die Bereiche sind für Licht durchlässig.

Bereiche, welche den Strahlengang umlenken sollen, können hingegen mit einer reflektierenden Beschichtung versehen sein. Diese Beschichtung kann metallisch sein und beispielsweise durch Sputtern oder Bedampfen aufgebracht werden.

Die den Strahlengang nicht unterbrechenden Bereiche des Rasters weisen bevorzugt eine in Bewegungsrichtung des Rasters gemessene konstante Breite und einen konstanten Abstand zueinander auf. Dabei entspricht der gegenseitige Abstand vorzugsweise der Breite der den Strahlengang unterbrechenden Bereiche. Das erleichtert die Signalauswertung.

Das Rasterbauteil kann, beispielsweise an einem Stoßfänger, angeordnet sein. Das Emitterbauteil ist in diesem Fall an einem Bauteil der Fahrzeugkarosserie anzuordnen, das sich bei einem Unfall nicht sofort so stark verlagert, wie der Stoßfänger. Es kann z.B. an einem Längsträger des Kraftfahrzeugs angeordnet sein. Das Rasterbauteil ist relativ verschiebbar zum Emitterbauteil angeordnet. Das Rasterbauteil kann in einer Führung des Emitterbauteils geführt sein. Es ist auch möglich die Führung für das Rasterbauteil in das Detektorbauteil zu integrieren. Der Lichtemitter ist dabei derart an dem Emitterbauteil angeordnet, dass der emittierte Lichtstrahl in einem rechten Winkel zu einer Bewegungsachse, d.h. zur Längsachse des Rasterbauteils auf das Raster trifft. Ebenso ist es möglich, das Emitterbauteil an einem Stoßfänger relativ verschiebbar zu dem Rasterbauteil anzuordnen.

Bei anderen Ausführungsformen kann der Winkel in Abhängigkeit von der Bauteilgeometrie variieren.

Es gibt unterschiedliche Möglichkeiten den Detektor zu platzieren. Bei einem geraden Strahlengang ist es zwingend erforderlich, den Detektor dem Lichtemitter gegenüberliegend anzuordnen. Der Detektor kann hierzu am Emitterbauteil fixiert sein. Es ist auch denkbar den Detektor an einem separaten Bauteil, das nicht unmittelbar mit dem Emitterbauteil verbunden ist, zu fixieren. Entscheidend ist das Zusammenspiel zwischen dem Emitterbauteil und dem Detektorbauteil.

Beim umgelenkten Strahlengang liegen Lichtemitter und Detektor in Bezug auf das Rasterbauteil auf derselben Seite. Der Lichtemitter und der Detektor bilden bevorzugt eine Einheit. Es ist möglich, Lichtemitter und Detektor direkt nebeneinander anzuordnen. Denkbar ist auch, dass der Detektor den Lichtemitter umgibt. Wesentlich für eine zuverlässige Detektion des Lichtstrahls ist, dass dieser bei Reflexion an dem Rasterbauteil möglichst wenig gestreut wird. Wünschenswert ist eine vollständige Reflexion des Lichtstrahls. Je nach Lage des Detektors und des Lichtemitters kann im Rahmen der Erfindung auch eine Umlenkung des Lichtstrahls im Bereich der den Lichtstrahl reflektierenden Bereiche vorgesehen sein. Beispielsweise kann der Lichtstrahl gezielt in eine bestimmte Richtung umgelenkt werden.

Sobald bei einem Unfall eine Verformung eines Fahrzeugbauteils eintritt, wird das in dem sich verformenden Bereich des Fahrzeugbauteils angeordnete Rasterbauteil relativ zum Emitterbauteil und auch relativ zum Detektor verschoben. In der umgekehrten Ausführung werden bei einer Verformung Emitterbauteil und Detektor relativ zum Rasterbauteil verschoben. In beiden Ausführungen wird der Strahlengang des vom Lichtemitter ausgesandten Lichtstrahls durch das Rasterbauteil alternierend unterbrochen. Durch diese Alternation entstehen zeitlich modulierte Lichtimpulse. Die Pulsweite ist direkt abhängig von der Deformationsgeschwindigkeit. Die Anzahl der einzelnen Pulse sind zudem ein Maß für die Intrusionstiefe, also den Deformationsweg des Fahrzeugbauteils im Bereich der Sensoreinheit.

Die Position des Rasters zum Lichtemitter kann bei einem unverformten Fahrzeugbauteil so gewählt sein, dass bis zu einer ersten Alternation ein Toleranzbereich vorgesehen ist. Dadurch wird verhindert, dass Sicherheitssysteme beispielsweise bei Erschütterungen aktiviert werden.

Es wird als besonders vorteilhaft angesehen, wenn die von dem Detektor detektierten Lichtimpulse als solche unmittelbar an die Auswerteeinheit weitergeleitet werden, ohne sie zuvor in eine andere Signalform umzuwandeln. Im Rahmen der Erfindung ist allerdings nicht ausgeschlossen, dass das zeitlich modulierte Lichtsignal in elektronische Impulse umgewandelt wird, bevor dies an die Auswerteeinheit übertragen wird. Da die Umwandlung jedoch Zeit benötigt, sind bevorzugt Lichtleiter vorgesehen, welche die detektierten Signale ohne Änderung der Signalform vom Detektor zur Auswerteeinheit übertragen.

Zur Auswertung der Lichtimpulse in einer Auswerteeinheit wird hierbei berücksichtigt, welchen geometrischen Bedingungen im Bereich des Rasters vorliegen. Das heißt, es muss der Auswerteeinheit bekannt sein, welches Rastermaß an dem Rasterbauteil vorliegt, um auf die gewünschten physikalischen Größen zurückrechnen zu können.

Bereits die Form des ersten Lichtimpulses enthält Infomationen, die zur Auswertung herangezogen werden können. Nach ein bis zwei Impulsen hat die Auswerteeinheit eine Information über eine Verformung eines Fahrzeugbauteils, deren Geschwindigkeit sowie deren Position, da das von der Auswerteeinheit empfange Detektorsignal eindeutig zugeordnet werden kann. Je mehr Impulse zur Auswertung herangezogen werden können, desto genauer sind die Informationen über die Verformung. Abhängig von Rastermaß und Unfallgeschwindigkeit sind Zeitkonstanten unter 1 ms leicht realisierbar. Dadurch besteht zwischen dem tatsächlichen Eintreten des Unfalls und der Detektion nur eine geringe Zeitdifferenz. Auf Basis dieses Ergebnisses können Sicherheitssysteme, insbesondere Insassenschutzsysteme, mit einem Zeitpuffer zielgerichtet und unfallangepasst aktiviert werden.

Die Auswerteeinheit kann als ein zentraler Knotenpunkt ausgeführt sein, an welchem die Signale von an verschiedenen Fahrzeugbauteilen angeordneten Sensoreinheiten zusammenlaufen. Die Auswertung der Signale aller Sensoreinheiten kann zentral in der Auswerteeinheit erfolgen. Ferner können alle Sensoreinheiten an einen zentralen Lichtemitter angeschlossen sein, der in oder an der Auswerteeinheit angebracht ist.

Für die ordnungsgemäße Funktionsweise des Sensors muss sichergestellt werden, dass das Rasterbauteil leicht gegenüber dem Emitterbauteil verschiebbar ist. Verklemmungen können beispielsweise durch Punktberührungen, oder linienförmige Berührungen zwischen Rasterbauteil und einer Führung des Emitterbauteils, vermieden werden. Es ist auch denkbar, dass begrenzt nachgiebige Materialien, insbesondere Kunststoffe zum Einsatz kommen, um Verklemmungen zu vermeiden.

Ein wesentlicher Vorteil der Erfindung ist, dass das von der Auswerteeinheit empfangene optische Signal der Sensoreinheit direkt ausgewertet werden kann, ohne dass ein Herausfiltern von Störgrößen notwendig ist.

Die Sensoreinheiten können überall dort, wo es als notwendig erachtet wird, am und im Kraftfahrzeug angebracht sein. Dadurch kann das Kraftfahrzeug mit einer Art optischem Netz versehen werden, dessen Signale in der zentralen Auswerteeinheit zusammenlaufen. Die Reaktionszeit des Systems setzt sich zusammen aus der Rechenzeit und der Zeitkonstante zwischen zwei Impulsen oder der Breite eines Lichtimpulses. Die Zeit zwischen dem Beginn der Verformung und dem Vorliegen des errechneten Ergebnisses, welches zur verformungsangepassten Auslösung von beispielsweise Insassenschutzsystemen führt, kann im Bereich von 1 ms bis 2 ms liegen. Da die Zeitkonstante abhängig ist von der Verformungsgeschwindigkeit, verkürzt sich die Reaktionszeit mit Zunahme der Verformungsgeschwindigkeit. Dadurch wird im Falle eines Unfalls ein maximaler Insassenschutz gewährleistet.

Die Erfindung wird anhand der nachfolgenden Zeichnungen näher beschrieben. Es zeigen:
- Figur 1: eine schematische Darstellung eines Rasterbauteils;
- Figur 2: eine schematische Darstellung eines Emitterbauteils;
- Figur 3: eine zweite Ausführungsform von Figur 2;
- Figur 4: eine dritte Ausführungsform von Figur 2;
- Figur 5: eine schematische Darstellung einer Sensoreinheit in der Draufsicht;
- Figur 6: Draufsicht auf Figur 5 mit verschobenem Rasterbauteil;
- Figur 7: einen Querschnitt von Figur 6;
- Figur 8: eine weitere Ausführungsform einer Sensoreinheit und
- Figur 9: eine schematische Darstellung eines erfindungsgemäßen Kraftfahrzeugs.

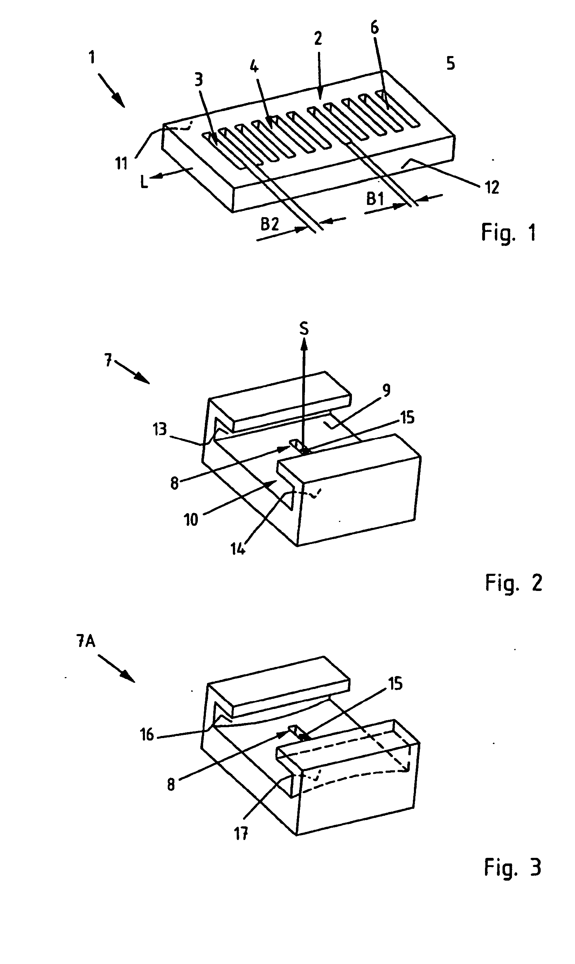

Figur 1 zeigt in einer schematischen Darstellung ein Rasterbauteil 1. Dieses weist ein Raster 2 auf, welches aus lichtdurchlässigen Bereichen 3 und lichtundurchlässigen Bereichen 4 besteht. Die lichtdurchlässigen Bereiche 3 sind hier als Langlöcher 5 ausgeführt und verlaufen quer zur Längsachse L des ersten Sensorbauteils 1. Die lichtundurchlässigen Bereiche 4 zwischen den Langlöchern 5 des Rasters 2 sind in Form von Stegen 6 ausgebildet. Alle Langlöcher 5 weisen die gleiche Breite B1 auf. Sie sind durch die Stege 6 mit ebenfalls gleicher Breite B2 voneinander beabstandet. Die lichtdurchlässigen Bereiche 3 sind in der dargestellten Ausführungsform als durchgängige Öffnungen ausgestaltet. Es besteht aber auch die Möglichkeit, diese lichtdurchlässigen Bereiche 3 mit lichtdurchlässigem Material, beispielsweise Kunststoff oder Glas zu versehen. Neben dieser langlochförmigen Ausgestaltung können die lichtdurchlässigen Bereiche 3 auch in Form von z.B. kreisförmigen oder rechteckigen Öffnungen ausgestaltet sein.

Figur 2 zeigt in einer schematischen Darstellung ein Emitterbauteil 7 mit einem Lichtemitter 8. Der Lichtemitter 8 befindet sich an der Fläche 9 des Emitterbauteils 7, welche parallel zum Raster 2 des Rasterbauteils 1 ausgerichtet ist. Dabei ist der Lichtemitter 8 maximal so breit, dass er gerade noch von einem Steg 6 des Rasters 2 abgedeckt werden kann. Der Lichtemitter 8 gibt ein konstantes Lichtsignal S ab und kann beispielsweise in Form einer LED 15 ausgeführt sein. Weiterhin weist das Emitterbauteil 7 einen Führungsbereich 10 für das Rasterbauteil 1 auf. In diesem Ausführungsbeispiel ist die Führung 10 als Linearführung ausgestaltet. Dabei werden Längsseiten 11, 12 des Rasterbauteils 1 von Seitenwänden 13, 14 des Emitterbauteils 7 umgriffen. Der dem Lichtemitter 8 gegenüberliegende Bereich bleibt frei. Dieser Bereich ist zur Anordnung eines Detektors vorgesehen, welcher den vom Lichtemitter 8 ausgehenden Lichtstrahl S oder dessen Unterbrechung detektiert.

Figur 3 stellt eine Alternative zur oben beschrieben Führung 10 dar. Hierbei sind die den Längsseiten 11, 12 des Rasterbauteils 1 zugewandten Flächen 16, 17 des Emitterbauteils 7 nicht gerade ausgestaltet, sondern leicht nach außen gebogen, d.h. konvex gestaltet. Diese Krümmung der Flächen 16, 17 vermindert das Risiko, dass sich das Rasterbauteil 1 bei einer Verschiebung relativ zum Emitterbauteil 7 in diesem verkantet.

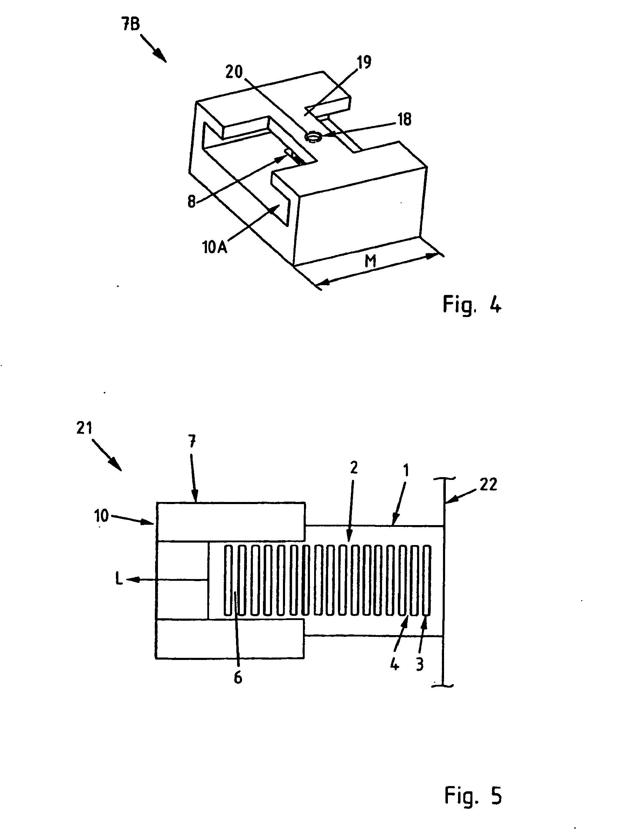

Figur 4 zeigt schematisch eine weitere Ausführungsform eines Emitterbauteils 7B. Hierbei ist ein Detektor 18 in einem Steg 19 dem Lichtemitter 8 gegenüber liegend angeordnet. Emitter- und Detektorbauteil sind zu einem Bauteil zusammengefasst. Der Detektor 18 ist dabei dem Lichtemitter 8 zugewandt angeordnet. Auf der anderen, dem Lichtemitter 8 abgewandten Seite des Detektors 18 befindet sich ein Anschluss 20, über welchen die detektierten Signale an eine Auswerteeinheit weitergeleitet werden.

Alternativ kann sich der Steg 19 auch über die komplette Länge M der Führung 10A erstrecken.

Figur 5 zeigt schematisch eine Sensoreinheit 21 in der Draufsicht. Das Rasterbauteil 1 wird hier durch die Führung 10 des Emitterbauteils 7 geführt. Das Rasterbauteil 1 ist mit einem Fahrzeugbauteil 22 oder einem Stossfänger verbunden und wird im Falle einer Verformung des Fahrzeugbauteils 22 relativ zum Emitterbauteil 7 in seiner Längsrichtung L verschoben. Dabei passiert das Raster 2 des Rasterbauteils 1 den Lichtemitter 8 und zwar alternierend mit den lichtdurchlässigen Bereichen 3 und den lichtundurchlässigen 4 Bereichen. In Figur 5 ist der Lichtstrahl S durch einen Steg 6 unterbrochen und der Lichtemitter 8 durch einen Steg 6 verdeckt.

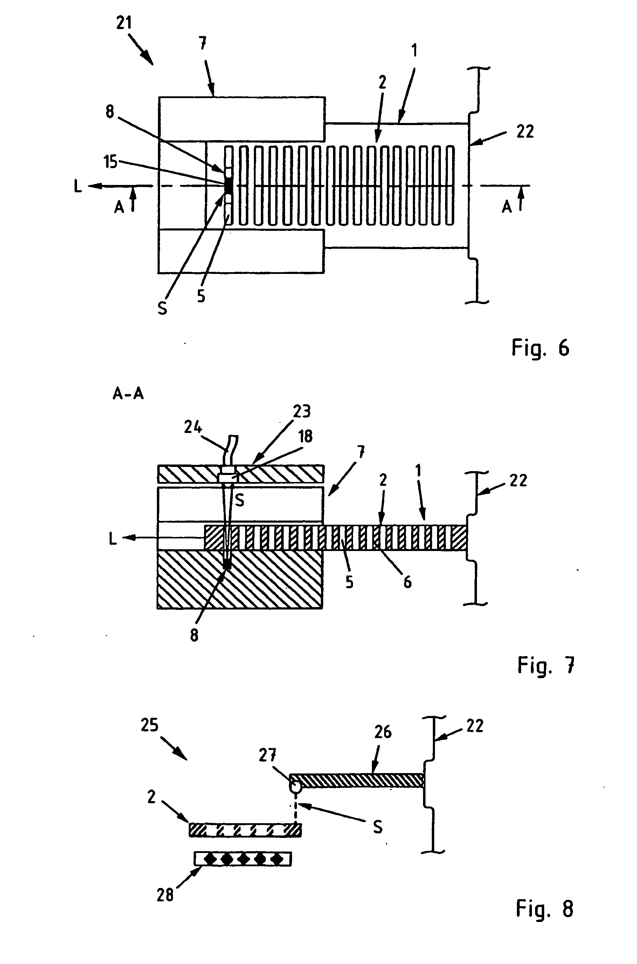

Figur 6 zeigt eine weitere schematische Abbildung der Sensoreinheit 21, mit dem Unterschied gegenüber der Figur 5, dass das Rasterbauteil 1 ein Stück in Richtung seiner Längsachse L relativ zum Emitterbauteil 7 durch angedeutete Verformung des Fahrzeugbauteils 22 verschoben wurde. Hier befindet sich ein Langloch 5 des Rasters 2 über dem Lichtemitter 8. Der Strahlengang ist nicht unterbrochen und der von der LED 15 ausgehende Lichtstrahl S kann ungehindert detektiert werden. Der Detektor, hier nicht dargestellt, ist gegenüber dem Lichtemitter 8 auf der betrachterseitigen Seite des Rasters 2 angeordnet.

In Figur 5 und 6 ist der Detektor nicht Bestandteil des Emitterbauteils 7, sondern an einem Detektorbauteil 23 angeordnet. Dieses wird anhand eines Längsschnittes durch die Darstellung der Figur 7 in Figur deutlich. Es ist zu erkennen, dass der Strahlengang nicht unterbrochen wird und der Lichtstrahl S das Langloch 5 des Rasters 2 passiert. Danach trifft der Lichtstrahl S auf den gegenüber dem Lichtemitter 8 angeordneten Detektor 18. Wird das Rasterbauteil 1 weiter in seiner Längsrichtung L verschoben, wird der Strahlengang durch den Steg 6 unterbrochen. Durch die Unterbrechung entstehen zeitlich modulierte Lichtimpulse. Der mit einer Auswerteeinheit verbundene Detektor 18 leitet die Lichtimpulse, beispielsweise über eine Lichtleitfaser 24, an die Auswerteeinheit weiter. Diese kann anhand der zeitlichen Abstände, d.h. der Frequenz und der Anzahl der einzelnen Impulse alle notwendigen Aussagen bezüglich der Verformungsgeschwindigkeit und dem Fortschritt der Verformung des Fahrzeugbauteils 22 berechnen.

In Figur 8 ist schematisch eine weitere Ausführungsform einer Sensoreinheit 25 dargestellt. Hierbei ist das Emitterbauteil 26 mit dem Lichtemitter 27 an einem Fahrzeugbauteil 22 angeordnet. Bei einer Verformung des Fahrzeugbauteils wird das Emitterbauteil 26 mit dem Lichtemitter 27 relativ gegenüber einem Raster 2 verschoben. Dabei wird der Lichtstrahl S, welcher vom Lichtemitter 27 ausgeht durch das Raster 2 alternierend unterbrochen und freigegeben. Die dadurch entstehenden Lichtimpulse werden von einem Detektor 28 aufgenommen und an eine Auswerteeinheit weitergeleitet. Dabei können das Raster 2 und der Detektor 28 als ein oder zwei Bauteile ausgeführt sein.

Durch die Verwendung eines Optokopplers mit mehreren Eingängen und einem Ausgang ergibt sich wiederum ein optisches Signal ähnlich der Ursprungsvariante.

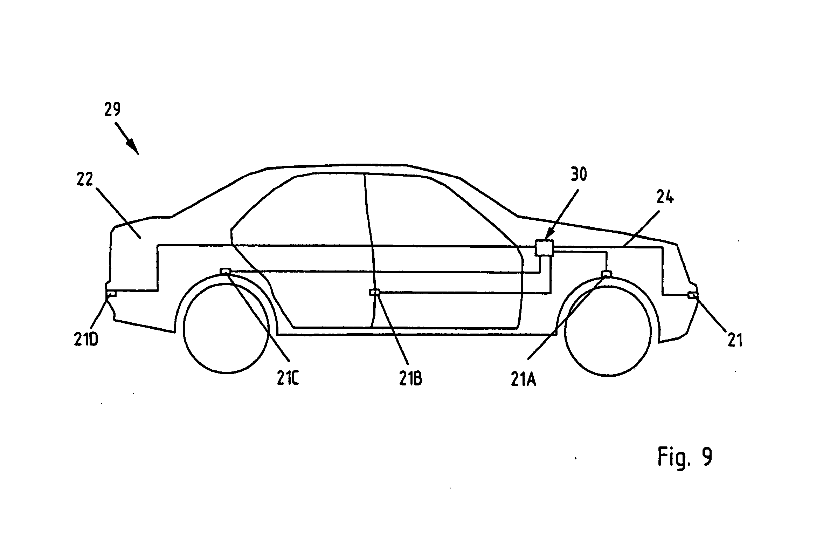

Figur 9 zeigt schematisch ein Kraftfahrzeug 29 mit einer Vorrichtung zur Detektion von Verformungen seiner Fahrzeugbauteile 22. Hierzu sind Sensoreinheiten 21, 21A, 21B, 21C, 21D an verschiedenen Bereichen der Fahrzeugbauteile 22, insbesondere der Karosserie angeordnet. Alle Sensoreinheiten 21, 21A, 21B, 21C, 21D sind mit einer zentralen Auswerteeinheit 30 verbunden. Dabei werden die detektierten Lichtimpulse über Lichtleitfasern 24 an die Auswerteeinheit 30 weitergeleitet. Diese enthält gleichzeitig mit der Information über eine Verformung des Fahrzeugbauteils 22 auch die Informationen darüber, welche Sensoreinheit 21, 21A, 21 B, 21C, 21D die Lichtimpulse sendet und damit über den Ort, an dem die Verformung auftritt. Demzufolge kann über diese zentrale Auswerteeinheit 30 auch die Aktivierung entsprechender Sicherheitssysteme erfolgen.

### Bezugszeichen:

- 1 -: Rasterbauteil
- 2 -: Raster
- 3 -: lichtdurchlässiger Bereich
- 4 -: lichtundurchlässiger Bereich
- 5 -: Langloch
- 6 -: Steg
- 7 -: Emitterbauteil
7A - Emitterbauteil
- 8 -: Lichtemitter
- 9 -: Fläche
- 10 -: Führung
10A - Führung
- 11 -: Längsseite
- 12 -: Längsseite
- 13 -: Seitenwand
- 14 -: Seitenwand
- 15 -: LED
- 16 -: Fläche
- 17 -: Fläche
- 18 -: Detektor
- 19 -: Steg
- 20 -: Führung
- 21 -: Sensoreinheit
21A - Sensoreinheit
21B - Sensoreinheit
21C - Sensoreinheit
21D - Sensoreinheit
- 22 -: Fahrzeugbauteil
- 23 -: Detektorbauteil
- 24 -: Lichtleitfaser
- 25 -: Sensoreinheit
- 26 -: Emitterbauteil
- 27 -: Lichtemitter
- 28 -: Detektor
- 29 -: Kraftfahrzeug
- 30 -: Auswerteeinheit

- B1 -: Breite Langloch
- B2 -: Breite Steg
- L -: Längsrichtung
- M -: Länge
- S -: Lichtstrahl

## Patentansprüche

1. Verfahren zur Detektion von Verformungen von Fahrzeugbauteilen, insbesondere Karosseriebauteilen, bei weichem eine Auswerteeinheit (30) Signale von mindestens einer Sensoreinheit (21, 21A, 21B, 21C, 21D) empfängt, wobei ein an einem Fahrzeugbauteil (22) angeordnetes Rasterbauteil (1) mit einem Raster (2) und ein Lichtemitter (8, 27) eines Emitterbauteils (7, 7A, 26) bei einer Verformung eines Fahrzeugbauteils relativ zueinander verschoben werden, wodurch ein Strahlengang eines von dem Lichtemitter (8, 27) auf einen Detektor (18, 28) treffenden Lichtstrahls (S) bei einer Verschiebung des Rasters (2) oder des Lichtemitters (8, 27) alternierend unterbrochen wird, wobei der Detektor (18) daraus resultierende Lichtimpulse detektiert und als zeitlich moduliertes Signal an die Auswerteinheit (30) überträgt, **dadurch gekennzeichnet, dass** in der Auswerteeinheit (30) aus dem zeitlichen Abstand der Lichtimpulse und/oder der Länge der Lichtimpulse eine Geschwindigkeit der Verformung des Fahrzeugbauteils (22) berechnet wird.

2. Verfahren nach Anspruch 1, **dadurch gekennzeichnet, dass** das zeitlich modulierte Signal in Form von Lichtimpulsen an die Auswerteeinheit (30) übertragen wird.

3. Verfahren nach Anspruch 1 oder 2, **dadurch gekennzeichnet, dass** die Auswerteeinheit (30) das signal einem bestimmten Fahrzeugbauteil (22) zuordnet.

4. Verfahren nach einem der Ansprüche 1 bis 3, **dadurch gekennzeichnet, dass** in der Auswerteeinheit (30) aus der Anzahl der Lichtimpulse ein Fortschritt der Verformung des Fahrzeugbauteils (22) berechnet wird.

5. Verfahren nach einem der Ansprüche 1 bis 4 **dadurch gekennzeichnet, dass** die in der Auswerteeinheit (30) ausgewerteten Signale der Sensoreinheit (21, 21A, 21B, 21C, 21D) als Eingangsparameter einer Steuereinheit zugeführt werden, mittels welcher Sicherheitssysteme aktivierbar sind.

6. Kraftfahrzeug mit wenigstens einer an eine Auswerteeinheit (30) angeschlossenen Sensoreinheit (21, 21A, 21B, 21C, 21D) zur Detektion von Verformungen eines Fahrzeugbauteils (22), wobei, die Sensoreinheit (21, 21A, 21B, 21C, 21D) wenigstens zwei Sensorbauteile umfasst, von denen ein Rasterbauteil (1) an einem Fahrzeugbauteil, (22) angeordnet ist, wobei das Rasterbauteil (1) mit einem Raster (2) und ein Lichtemitter (8, 27) relativ zueinander verschiebbar ist, wobei ein Strahlengang eines vom Lichtemitter (8, 27) auf einen Detektor (18, 28) treffenden Lichtstrahls (S) von dem Raster (2) alternierend unterbrechbar ist und wobei der Detektor (18, 28) mit der zentralen Auswerteeinheit (30) verbunden ist und daraus resultierende Lichtimpluse detektiert und als zeitlich moduliertes Signal an die Auswerteeinheit (30) überträgt, **dadurch gekennzeichnet, dass** das Emitterbauteil (7, 7A) oder das Detektorbauteil (23) eine Führung (10, 20) für das Rasterbauteil (1) aufweist und in der Auswerteeinheit (30) aus dem zeitlichen Abstand der Lichtimpluse und/oder der Länge der Lichtimpulse eine Geschwindigkeit der Verformung des Fahrzeugbauteils berechnet wird.

7. Kraftfahrzeug nach Anspruch 6, **dadurch gekennzeichnet, dass** das Raster (2) lichtdurchlässige Bereiche (3) und lichtundurchlässige Bereiche (4) aufweist.

8. Kraftfahrzeug nach Anspruch 7, **dadurch gekennzeichnet, dass** die lichtdurchlässigen Bereiche (3) und die lichtundurchlässigen Bereiche (4) gleichmäßig abwechselnd angeordnet sind.

9. Kraftfahrzeug nach Anspruch 6 oder 8, **Dadurch gekennzeichnet, dass** die lichtundurchlässigen Bereiche (4) eine konstante Breite (B2) aufweisen.

10. Kraftfahrzeug nach Anspruch 6, **dadurch gekennzeichnet, dass** das Raster Licht reflektierende Bereiche und Licht nicht reflektierende Bereiche aufweist.

11. Kraftfahrzeug nach einem der Ansprüche 7 bis 10, **dadurch gekennzeichnet, dass** der Detektor (18) am Emitterbauteil (7) angeordnet ist.

12. Kraftfahrzeug nach einem der Ansprüche 6 bis 10, **dadurch gekennzeichnet, dass** der Detektor (18) an einem Detektorbauteil (23) angeordnet ist, das mit dem Lichtemitter (8) verbunden ist.

13. Kraftfahrzeug nach Anspruch 9, **dadurch gekennzeichnet, dass** die lichtdurchlässigen Bereiche (3) des Rasters (2) als Langloch (5) ausgeführt sind.

14. Kraftfahrzeug nach einem der Ansprüche 6 bis 13, **dadurch gekennzeichnet, dass** der Detektor (18, 28) über einen Lichtleiter mit der zentralen Auswerteein (30) verbunden ist.

15. Kraftfahrzeug nach einem der Ansprüche 6 bis 14, **dadurch gekennzeichnet, dass** das Emitterbauteil. (7, 7A) an einem Längsträger angeordnet ist.

16. Kraftfahrzeug nach einem der Ansprüche 6 bis 15, **dadurch gekennzeichnet, dass** das Rasterbauteil (1) aus flexiblem Material hergestellt ist.

## Claims

1. A method for detecting deformations of vehicle components, in particular body components, in which an evaluation unit (30) receives signals from at least one sensor unit (21, 21A, 21B, 21C, 21D), with a grid component (1) arranged on a vehicle component (22) and having a grid (2), and a light emitter (8, 27) of an emitter component (7, 7A, 26), being displaced relative to one another in the event of a deformation of a vehicle component, whereby a path of a light beam (S) striking a detector (18, 28) from the light emitter (8, 27) is alternately interrupted if the grid (2) or light emitter (8, 27) is displaced, with the detector (18) detecting light pulses resulting from such displacement and transferring them as a time-modulated signal to the evaluation unit (30), wherein a speed of the deformation of the vehicle component (22) is calculated in the evaluation unit (30) from the chronological interval of the light pulses and/or length of the light pulses.

2. A method according to claim 1 wherein the time-modulated signal is transferred to the evaluation unit (30) in the form of light pulses.

3. A method according to claim 1 or 2 wherein the evaluation unit (30) associates the signal with a particular vehicle component (22).

4. A method according to any one of claims 1 to 3 wherein a progress of the deformation of the vehicle component (22) is calculated in the evaluation unit (30) from the number of light pulses.

5. A method according to any one of claims 1 to 4 wherein the signals of the sensor unit (21, 21A, 21B, 21C, 21D) which are evaluated in the evaluation unit (30) are fed as input parameters to a control unit by way of which safety systems can be activated.

6. A motor vehicle having at least one sensor unit (21, 21A, 21 B, 21C, 21D) that is connected to an evaluation unit (30) and that is for detecting deformations of a vehicle component (22), with the sensor unit (21, 21A, 21B, 21C, 21D) comprising at least two sensor components of which a grid component (1) is arranged on a vehicle component (22), with the grid component (1) - which has a grid (2) - and a light emitter (8, 27) being displaceable relative to one another, with a path of a light beam (S) from the light emitter (8, 27) and which strikes a detector (18, 28) being alternately interruptible by the grid (2), and with the detector (18, 28) being connected to the central evaluation unit (30) and detecting resulting light pulses and transferring them as time-modulated signal to the evaluation unit (30), wherein the emitter component (7, 7A) or the detector component (23) exhibits a guide (10, 20) for the grid component (1) and in the evaluation unit a speed of the deformation of the vehicle component is calculated (30) from the chronological interval of the light pulses and/or the length of the light pulses.

7. A motor vehicle according to claim 6 wherein the grid (2) exhibits translucent regions (3) and nontranslucent regions (4).

8. A motor vehicle according to claim 7 wherein the translucent regions (3) and the nontranslucent regions (4) are arranged evenly alternately.

9. A motor vehicle according to claim 6 or 8 wherein the nontranslucent regions (4) exhibit a constant width (B2).

10. A motor vehicle according to claim 6 wherein the grid exhibits light-reflecting regions and non light-reflecting regions.

11. A motor vehicle according to any one of claims 7 to 10 wherein the detector (18) is arranged on the emitter component (7).

12. A motor vehicle according to any one of claims 6 to 10 wherein the detector (18) is arranged on a detector component (23) which is connected to the light emitter (8).

13. A motor vehicle according to claim 9 wherein the translucent regions (3) of the grid (2) are configured as a slot (5).

14. A motor vehicle according to any one of claims 6 to 13 wherein the detector (18, 28) is connected by an optical fibre to the central evaluation unit (30).

15. A motor vehicle according to any one of claims 6 to 14 wherein the emitter component (7, 7A) is arranged on a longitudinal beam.

16. A motor vehicle according to any one of claims 6 to 15 wherein the grid component (1) is manufactured from flexible material.

## Revendications

1. Procédé de détection de déformations de composants de véhicule automobile, en particulier de composants de carrosserie, dans lequel une unité d'évaluation (30) reçoit des signaux depuis au moins une unité de capteurs (21, 21A, 21B, 21C, 21D), dans lequel un composant tramé (1) agencé sur un composant d'un véhicule automobile (22) et doté d'une trame (2), et un émetteur de lumière (8, 27) d'un composant émetteur (7, 7A, 26) sont déplacés l'un par rapport à l'autre lors d'une déformation du composant de véhicule automobile, en raison de quoi un trajet d'un rayon lumineux (S) provenant de l'émetteur de lumière (8, 27) et tombant sur un détecteur (18, 28) est interrompu de façon alternante lors d'un déplacement de la trame (2) ou de l'émetteur de lumière (8, 27), dans lequel le détecteur (18) détecte des impulsions de lumière résultantes et les transmet à l'unité d'évaluation (30) sous forme d'un signal modulé dans le temps, **caractérisé en ce qu'**une vitesse de la déformation du composant de véhicule (22) est calculée dans l'unité d'évaluation (30) à partir de l'écart temporel des impulsions de lumière et/ou de la longueur des impulsions de lumière.

2. Procédé selon la revendication 1, **caractérisé en ce que** le signal modulé dans le temps est transmis à l'unité d'évaluation (30) sous la forme d'impulsions de lumière.

3. Procédé selon la revendication 1 ou 2, **caractérisé en ce que** l'unité d'évaluation (30) associe le signal à un composant déterminé (22) du véhicule.

4. Procédé selon l'une des revendications 1 à 3, **caractérisé en ce qu'**une progression de la déformation du composant de véhicule (22) est calculée dans l'unité d'évaluation (30) à partir du nombre des impulsions de lumière.

5. Procédé selon l'une des revendications 1 à 4, **caractérisé en ce que** les signaux de l'unité de capteurs (21, 21A, 21B, 21C, 21D), évalués dans l'unité d'évaluation (30), sont admis à titre de paramètres d'entrée pour une unité de commande au moyen de laquelle des systèmes de sécurité peuvent être activés.

6. Véhicule automobile comprenant au moins une unité de capteurs (21, 21A, 21B, 21C, 21B) connectée à une unité d'évaluation (30) pour la détection de déformations d'un composant (22) de véhicule automobile, dans lequel l'unité de capteurs (21, 21A, 21B, 21C, 21B) comprend au moins deux composants capteurs parmi lesquels un composant tramé (1) est agencé sur un composant (22) de véhicule, dans lequel le composant tramé (1) doté d'une trame (2) et un émetteur de lumière (8, 27) sont déplaçables l'un par rapport à l'autre, et un trajet du rayon lumineux (S) provenant de l'émetteur de lumière (8, 27) et tombant sur un détecteur (18, 28) est susceptible d'être interrompu de manière alternante par la trame (2), et dans lequel le détecteur (18, 28) est connecté à l'unité d'évaluation centrale (30) et détecte les impulsions de lumière résultantes puis les transmet à l'unité d'évaluation (30) sous forme d'un signal modulé dans le temps, **caractérisé en ce que** le composant émetteur (7, 7A) ou le composant détecteur (23) comprend un guide (10, 20) pour le composant tramé (1), et **en ce qu'**une vitesse de la déformation du composant de véhicule est calculée dans l'unité d'évaluation (30) à partir de l'écart temporel des impulsions de lumière et/ou de la longueur des impulsions de lumière.

7. Véhicule automobile selon la revendication 6, **caractérisé en ce que** la trame (2) comprend des zones transparentes à la lumière (3) et des zones opaques à la lumière (4).

8. Véhicule automobile selon la revendication 7, **caractérisé en ce que** les zones transparentes à la lumière (3) et les zones opaques à la lumière (4) sont agencées de manière régulièrement alternante.

9. Véhicule automobile selon la revendication 6 ou 8, **caractérisé en ce que** les zones opaques à la lumière (4) présentent une largeur constante (B2).

10. Véhicule automobile selon la revendication 6, **caractérisé en ce que** la trame comprend des zones réfléchissant la lumière et des zones ne réfléchissant pas la lumière.

11. Véhicule automobile selon l'une des revendications 7 à 10, **caractérisé en ce que** le détecteur (18) est agencé sur le composant émetteur (7).

12. Véhicule automobile selon l'une des revendications 6 à 10, **caractérisé en ce que** le détecteur (18) est agencé sur un composant détecteur (23) qui est relié à l'émetteur de lumière (8).

13. Véhicule automobile selon la revendication 9, **caractérisé en ce que** les zones transparentes à la lumière (3) de la trame (2) sont réalisées sous forme de trous oblongs (5).

14. Véhicule automobile selon l'une des revendications 6 à 13, **caractérisé en ce que** le détecteur (18, 28) est relié à l'unité d'évaluation centrale (30) via un conducteur de lumière.

15. Véhicule automobile selon l'une des revendications 6 à 14, **caractérisé en ce que** le composant émetteur (7, 7A) est agencé sur un longeron.

16. Véhicule automobile selon l'une des revendications 6 à 15, **caractérisé en ce que** le composant tramé (1) est fabriqué en un matériau flexible.
